# EUROPEAN PATENT APPLICATION

(11) **EP 0 571 900 A1**
(43) Date of publication of application: **01.12.1993**
(21) Application number: 93108272.1
(22) Date of filing: 21.05.1993
(51) Int. Cl.: G01B 13/04

(54) **Device for continuous measuring of the mass irregularities of a fibre bundle**

(30) Priority: 27.05.1992 CS 1593/92
(71) Applicant: VYZKUMNY USTAV TEXTILNICH STROJU, Liberec (CZ)
(72) Inventor: Sedlarik, Jaroslav, Liberec (CZ)
(74) Representative: Patentanwälte Beetz - Timpe - Siegfried Schmitt-Fumian - Mayr

(57) **Abstract**

The subject-matter of the invention is a device for continuous measuring the mass irregularity of a fibre bundle (1), especially in textile machines, comprising a measuring chamber (2) with air supplied therein. The measuring chamber (2) is equipped with an inlet and an outlet slot (3, 4) through which the fibre bundle (1) passes and with an instrument (9; 10) for measuring the air pressure inside the measuring chamber (2) supplied with air from an overcritical jet (6) connected to a source of constant pressure air.

## Description

The invention relates to a device for continuous measuring the mass irregularity of a fibre bundle, especially in textile machines, comprising a measuring chamber with air supplied therein and equipped with an inlet slot and an outlet slot for fibre bundle passage as well as with an air pressure measuring instrument for measuring the air pressure inside the measuring chamber.

For measuring the mass irregularity of a fibre bundle a mechanical device is known in which a fibre bundle, as a rule of a sliver, is fed between two rotating rollers whose distance is being measured. Such a device is very complicated and requires an exact synchronisation of the roller drive with the driving system of the machine.

In another known device the fibre bundle passes through a funnel and the force exerted by the fibre bundle on the funnel is equivalent to its mass irregularity. This device is directly dependent on the feeding speed of the fibre bundle.

Other known devices work on the principle of measuring the air pressure generated by the movement of the fibre bundle. The movement and density of the fibre bundle compress the air whose pressure will be measured and is equivalent to the fibre bundle mass. The results of said measurements also depend on the feeding speed of the fibre bundles.

The drawbacks of the preceding systems have been partly eliminated by the device according to CS-A-189255 in which the fibre bundle passes through a measuring chamber fitted with a pair of slots restricting the fibre bundle as it passes through them. Air is supplied to the measuring chamber and instruments for measuring the quantity of said supplied air and the air pressure in the measuring chamber are provided.

The drawback of this system consists in the complicated measuring procedure, especially of the quantity of air supplied to the measuring chamber.

The drawbacks of the prior art devices are eliminated by the device for continuous measuring of the mass irregularity of a fibre bundle according to the invention whose principle consists in that the measuring chamber is supplied with air from an overcritical jet supplying a constant quantity of air and connected to a source of constant air pressure.

To improve the quality of measurement a damping circuit for setting a time constant of the air pressure instrument can be inserted between the measuring chamber and the air pressure instrument.

To increase the security and protection in particular of the measuring instruments an overpressure limiter can be inserted between the overcritical jet and the air pressure instrument.

In all the above mentioned embodiments the air pressure instrument can be made as a pneumoelectrical converter whose output can be connected to various known devices for processing its signal, for instance to the automatic controlling of the machine. Advantageously, the inlet and outlet slots of the measuring chamber are identical in size, and the overpressure in the chamber should be low, so that the pressure fluctuations in the chamber are independent of the feeding speed of the fibre bundle to such an extent that even at zero speed of the fibre bundle the overpressure in the chamber is equivalent to the mass of the fibre bundle.

The constant quantity of supplied air is provided for critical outlet speed of pressure air from the overcritical jet. If the pressure gradient on the overcritical jet is superior to the critical one, the pressure changes in the measuring chamber are so small that their influence on the supplied quantity and, consequently, on the measurement precision is negligible. Due to the use of the critical speed of the gases leaving the jet, it is sufficient to use a current reduction station to provide the feeding pressure for the overcritical jet, with no substantial requirements on the stabilization of this feeding pressure.

With this measuring system of the mass irregularity of the fibre bundle, only one measuring place (unit) is required, i.e., for measuring the pressure in the measuring chamber whose value and fluctuations are equivalent to the mass and mass fluctuations of the fibre bundle. Such a device can be a pure measuring instrument with direct indication of the deviations from a predetermined mass (weight) of the fibre bundle, e.g. a manometer, or an instrument including a pneumoelectrical converter, whose electrical signals can be used for measuring and also as input signals of a control circuit for correcting the mass irregularity of a fibre bundle.

The device according to the invention eliminates the drawbacks of the existing devices, especially in that it is simple and independent of the feeding speed of the fibre bundle. By changing the air pressure prior to the jet, the working point can be adjusted in accordance with various thickness of the fibre bundle, into the area of linear dependence, which is of considerable importance for the electronic processing of the signal. The working point can be adjusted also by adjusting the cross section of the slot of the overcritical jet.

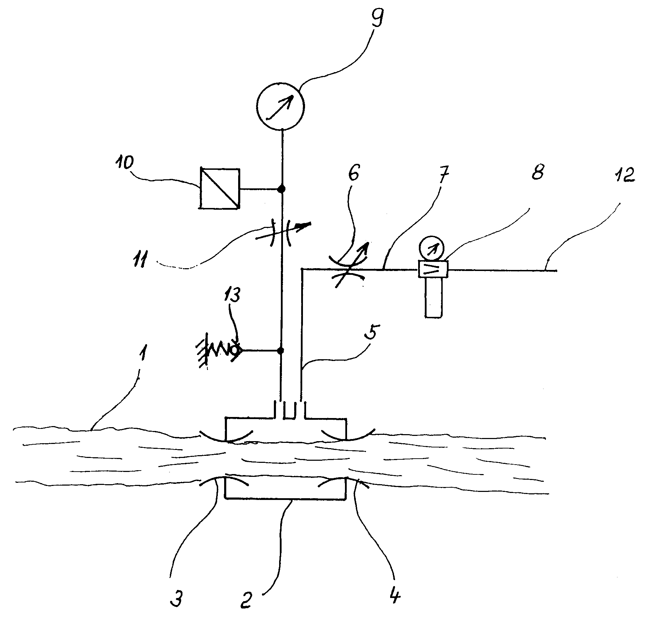

An embodiment of the device according to the invention is schematically shown in the accompanying drawing and will be explained in detail.

A fibre bundle 1 for instance a sliver coming from a carding machine, is moved through a measuring chamber 2 made as a closed vessel comprising an adjustable inlet slot 3 and an adjustable outlet slot 4 disposed in line in both side walls of said vessel for the straight passage of the fibre bundle 1. An air feeding pipe 5 ends in a side wall of the measuring chamber 2 whose inner space communicates with a pressure sensor 9, e.g. a suitable manometer 9.

The size and the shape of the inlet and outlet slots 3, 4 is chosen so as to restrict only insignificantly the passing fibre bundle 1 without hampering its passage through the measuring chamber 2 and without distorting the passing fibre bundle 1 in any way.

The feed piping 5 is connected to the outlet of an over-critical jet 6 whose inlet is joined by a connecting piping 7 to the outlet of a pressure reduction device 8 or of another source of constant pressure air by a pressure line 12.

The inner space of the measuring chamber 2 can be connected to a pneumoelectrical converter 10 whose outlet is connected with not shown devices for processing the electrical signal of the converter 10, for instance for automatic controlling the textile machine on the basis of the detected mass irregularity of the fibre bundle 1 or for feeding an indicator situated at a distance from the measuring chamber 2, or also for both of said activities.

In the shown example the pneumoelectrical converter 10 is situated before the manometer 9 in the same line. However, the converter 10 can be connected with the inner space of the measuring chamber 2 separately, or also the manometer 9 can be replaced by the pneumoelectrical converter 10 and the related devices.

Inserted between the measuring chamber 2 and the manometer 9 or the pneumoelectrical converter 10 is a damping circuit 11, for instance an adjustable pneumatic resistor, serving to adjust the time constant of the manometer 9 or of the pneumoelectrical converter 10.

Between the manometer 9 or the pneumoelectrical converter 10 and the overcritical jet 6 can be inserted an overpressure limiter 13 serving to protect the manometer 9 or the pneumoelectrical converter 10.

The mass irregularity of the fibre bundle 1 is measured during its passage through the measuring chamber 2 receiving air supply by the air distributor line 12 fed by a not shown pressure air source. From the air distributor line 12 the pressure air is led into the reduction station 8 from which the air of a predetermined constant pressure flows through the overcritical jet 6 supplying a constant amount of air into the measuring chamber 2. The actual amount of air passing through the overcritical jet 6 can be adjusted by changing the pressure gradient on the overcritical jet 6 or by changing the outlet cross section of the overcritical jet 6. The air leaves the measuring chamber 2 through the inlet and outlet slots 3, 4 through which passes also the fibre bundle 1. Depending on the quantity of the fibres in the slots 3, 4 at a given interval the air pressure in the measuring chamber 2 is being changed.

The air pressure in the measuring chamber 2 is measured with the manometer 9 and/or monitored by the pneumoelectric converter 10.

The protection of the manometer 9 and/or pneumoelectric converter 10 is provided for by the overpressure limiter 13 ensuring the letting out of the surplus air into the surrounding space and thus limiting the maximal possible overpressure in the measuring device if the adjusted overpressure, usually represented by the top value of the manometer 9 or of the pneumoelectric converter 10 has been surpassed.

The device according to the invention can record very short mass irregularities of the fibre bundle 1. In most cases in the practice, especially in measurements in which very short irregularities are irrelevant, is in the represented example inserted before the manometer 9 or the pneumoelectric converter 10 the damping circuit 11 serving to adjust the time constant of the manometer 9 or of the pneumoelectrical converter 10.

## Claims

1. Device for continuous measuring the mass irregularity of a fibre bundle (1), especially in textile machines, comprising a measuring chamber (2) having an inlet slot (3) and an outlet slot (4) for fibre bundle (1) passage, means (6, 7) for supplying pressure air in the measuring chamber (2) and an air pressure measuring instrument for measuring the air pressure inside the measuring chamber (2),
**characterized** in that
the means for supplying pressure air in the measuring chamber (2) include at least one overcritical jet (6) connected to a source of constant pressure air.

2. Device according to claim 1,
characterized in that
a damping circuit (11) is provided between the measuring chamber (2) and the air pressure measuring instrument (9, 10).

3. Device according to claims 1 or 2,
characterized in that
an overpressure limiter (13) is provided between the overcritical jet (6) and the air pressure instrument (9, 10) for protecting said instrument.

4. Device according to claims 1 to 3,
characterized in that
the air pressure instrument (9, 10) is provided with a pneumoelectrical converter (10).
